Europäisches Patentamt

European Patent Office

Office européen des brevets

(19)

(11) Publication number: **0 047 770**
**B1**

(12) **EUROPEAN PATENT SPECIFICATION**

(45) Date of publication of patent specification: **29.08.84**

(51) Int. Cl.³: **H 02 G 3/22, F 16 L 5/02**

(21) Application number: **81900738.6**

(22) Date of filing: **13.03.81**

(86) International application number:
**PCT/SE81/00082**

(87) International publication number:
**WO 81/02815 01.10.81 Gazette 81/23**

(54) **DEVICE FOR LAYING A CONDUIT THROUGH A FIRE SEALING LEAD-THROUGH.**

(30) Priority: **14.03.80 SE 8002047**

(43) Date of publication of application:
**24.03.82 Bulletin 82/12**

(45) Publication of the grant of the patent:
**29.08.84 Bulletin 84/35**

(84) Designated Contracting States:
**AT CH DE FR GB LI NL**

(56) References cited:
**FR-A-2 171 021**
**GB-A-1 485 621**
**SE-B- 412 795**
**SE-B- 416 253**

(73) Proprietor: **TELEFONAKTIEBOLAGET L M ERICSSON**
**S-126 25 Stockholm (SE)**

(72) Inventor: **LEGERIUS, Bengt Efraim**
**Hagvägen 6**
**S-611 65 Nyköping (SE)**
Inventor: **SIEBERT, Hans Werner**
**Skrakvägen 8**
**S-613 00 Oxelösund (SE)**

Courier Press, Leamington Spa, England.

## Description

Technical Field

The present invention relates to a device for laying a conduit through a fire-sealing lead-through in a building member such as a cast concrete wall, roof or floor, or cast section thereof. The building member can also consist of a relatively thin wall, for example, in a fireproof material such as steel, e.g. a vessel bulkhead. By the term "conduit" is intended, for example, electric cable, piping, ventilation, ducting or the like, and the term is also intended to include a group of such elements.

The lead-through, i.e. the hole in a wall or floor enabling the passage of electric cables, piping, ventilation, ducting or other installation components from one room to another always constitute a large risk in connection with fire. These leads-through constitute obvious propagation paths for both smoke and flames. It is therefore often of decisive importance for fire safety that such a lead-through is sealed in a mode effectively preventing the propagation of both smoke and fire. The lead-through is usually provided by leaving a recess in a wall or the like on casting concrete or laying the courses of a wall. Alternatively a passage can be cut in the ready-cast or laid wall. At a later building stage conduits are then taken through these leads-through, which are subsequently sealed against fire, i.e. the free space between the conduits and the wall of the lead-through is filled out with a fire resistant filling material.

Background Art

It is known to mount a frame in a lead-through, said frame being filled with a plurality of parallelepipedic blocks. At least some of these blocks are parted and have mutually opposing semicircular recesses for a cable. The cylindrical space between these block halves is filled with a cylindrical sealing body which can thus be removed to make room for a cable. By tightening or clamping, the clamping frame affords the desired tight engagement between the blocks and the cables. The drawback of such a clamping frame is however that the blocks supplied only afford sealing for certain cable dimensions and a certain number of cables. In turn, this has resulted in that during the supplementary laying of cable through such a clamping frame, a whole block is quite simply removed so that the seal between the cable and the adjacent blocks is lost. Further, it has often been observed that blocks have been lost during handling and have not been replaced, the lead-through thus having through openings which nullify the fire protecting function of the device.

It is further already known to utilize rubber bushings to seal a cable lead-through (of British Patent Specification 953 869), a tubular rubber grommit being pressed into a lead-through, subsequent to which a cable group is forced through the hole in the grommit. Such a technique is not particularly usable for fire sealing purposes. However, since the cables must usually be pulled a long way through the grommit, as well as a new lead-through having to be arranged and a new grommit provided if a further cable group is to be laid through the wall.

A plastics moulding technique has therefore been taken up, which signifies that the cables or conduits are laid in the lead-through, the lead-through then being temporarily sealed with shuttering, and a fire resistant silicon is foamed in situ in the lead-through. This technique is offered by Studsvik Energiteknik AB under the name "Brandtätningssystem (Fire Sealing System) FC-225", where a silicon foam is utilized, which is commercially available under the name "Dow Corning 3-6548 RTV". If it is desired to lay a conduit after afterwards, e.g. through a wall, a further lead-through should be made for it, and the lead-through should be sealed with the FC-225 technique. This is troublesome, especially if the wall is concrete, and expensive, not the least with the thought that wall claddings such as panels and wallpaper are often damaged thereby, and must be replaced.

Alternatively, a hole can be bored through a fire seal in an existing lead-through and after laying the cable, the annular gap between hole and cable can be subsequently sealed.

Further, a device for laying a conduit through a building element by means of an awl-like tool and a sleeve is known from FR—A— 2 171 021.

Disclosure of Invention

The present invention relates to a lead-through distinguished from the above mentioned, known leads-through for a conduit through a building member such as a cast wall, roof or floor or cast section thereof e.g. lightweight concrete blocks or wall modules or structural flooring from precast concrete or lightweight concrete units, whereby the lead-through in itself being so formed that above-mentioned drawbacks are considerably reduced or eliminated. The lead-through thus comprises an elastic fire retardant foamed material, which is kept compressed in the lead-through so that after the conduit has been laid it is sealingly clamped in the foamed material by compression of the latter. The lead-through can be prefabricated or made on site. Characterizing for the device in accordance with the invention is a sleeve, slit at at least one end, and preferably at both ends, to form a funnel-shaped flarable end portion, and a conical driving tip intended for coaction with one end of the sleeve, the insertion end, the tip being intended for coaction with the sleeve when the sleeve is being thrust through the foamed material to move the foamed material under compression to one side, and after passing through the foamed material to relinquish the sleeve, which, in this situation forms a conduit laying duct protecting the foamed material.

Apart from the above-mentioned disadvantages in previously known devices for a fire sealing of a lead-through being substantially reduced or eliminated there is obtained by means of the invention complete sealing and sound insulation for the lead-through both before and after conduit laying. Furthermore, one or more conduits can in principle be pulled through the lead-through at optional places. The driving tip is then suitably penetrated into the foamed material first, or if several conduits are to be laid through the lead-through, a tip for each conduit, whereafter the insertion end of the sleeve is inserted in the tip. The funnel-shaped sleeve end opening formed by the slit-up sleeve end has the advantage that pulling the conduit through the sleeve is facilitated, since jamming of the conduit at the sleeve end is thus prevented. This advantage is especially essential with the thought that often long conduits must be pulled through the sleeve and often in difficultly accessible places, e.g. leads-through situated high up. Conduit laying is facilitated even more when the sleeve has its ends interiorly chamfered in a preferred embodiment.

The sleeve is furthermore preferably provided at its end opposite the insertion end with projecting abutments for coactions with recesses in a tool handle adapted for insertion and removal of the sleeve in, and from, the foamed material. Particularly withdrawal of the sleeve from the foamed material is facilitated to a great degree hereby, and there is also allowed simple withdrawal of the sleeve even in difficultly accessible places. For even better accessibility, the sleeve is preferably provided with a plurality of such abutments disposed symmetrically round the periphery thereof.

After withdrawal of the sleeve from the foamed material, the sleeve must be removed from the conduit. In accordance with the invention the sleeve is provided with a longitudinal line of weakness, preferably in the form of perforation, along which the sleeve is cut after extraction. In this case it should be noted that the sleeve should not be slit up from the beginning, since the stiffness of the sleeve can thus be insufficient for a correct insertion in the foamed material. For the purpose of slitting up the sleeve, the tool handle is, in accordance with the invention, preferably, provided with a cutting edge, and furthermore the tool handle is formed with a groove for penetration of the sleeve through the foamed material, the sleeve end being fitted into the groove during penetration of the driving tip and sleeve through the foamed material.

Preferred embodiments of the invention will now be described in detail in the following while referring to the appended drawings.

Brief Description of Drawings

Figure 1 is a section along the line I—I in Figure 2 of an embodiment of a fire sealing body.

Figure 2 is an endview of the body seen from the left in Figure 1.

Figure 3 illustrates in side view and in an exploded sketch the fitting of a fire sealing body between two shuttering walls.

Figure 4 is a section corresponding to the one in Figure 1 and showing the body in a fitted position between two shuttering walls and after the shuttering has been filled with concrete.

Figure 5 is a plan view to a larger scale of a fastening element suitably formed for the fire sealing body according to Figures 1 and 2, for fixing the body during casting, e.g. casting as illustrated in Figure 4.

Figure 6 is a section along the line VI—VI in Figure 5.

Figure 7 is a section along the line VII—VII in Figure 5.

Figures 8—11 are sections corresponding to Figure 4, but after taking away the shuttering, and in different work operations illustrates putting a cable through the body with the aid of a tool specially constructed for this purpose.

Figure 12 is a perspective view and to a larger scale of the head of a handle incorporated in the tool.

Best Mode for Carrying out the Invention

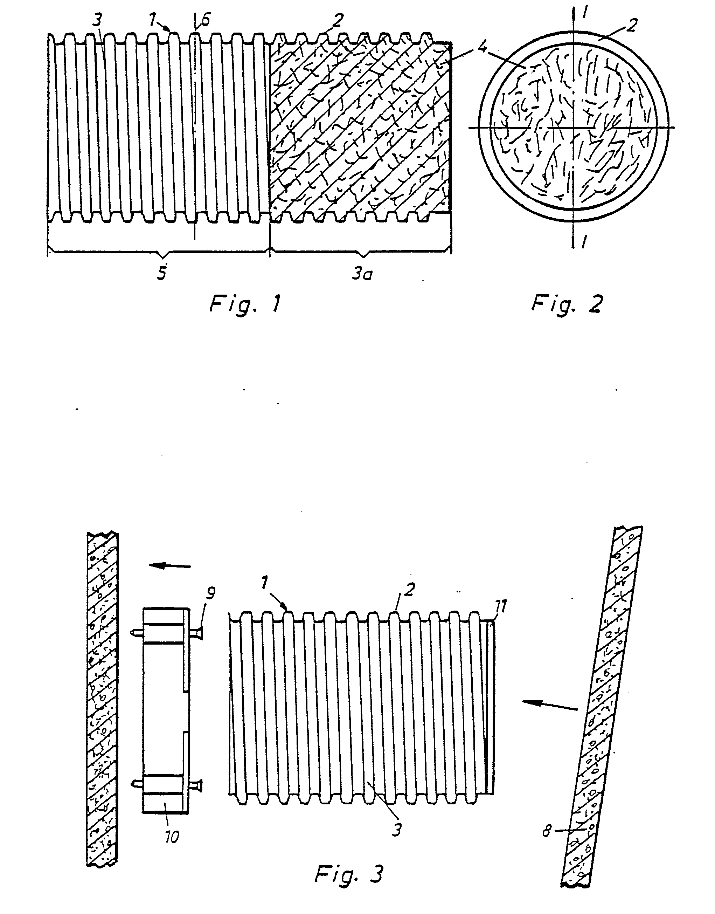

Figures 1 and 2 illustrate the principal construction of a fire sealing body, generally denoted by the numeral 1. This consists of a casing 2, axially formed with a thread 3. In the illustrated embodiment the casing 2 is formed so that there is an external as well as an internal thread. The casing may consist of a thermoplastic such as polyethylene.

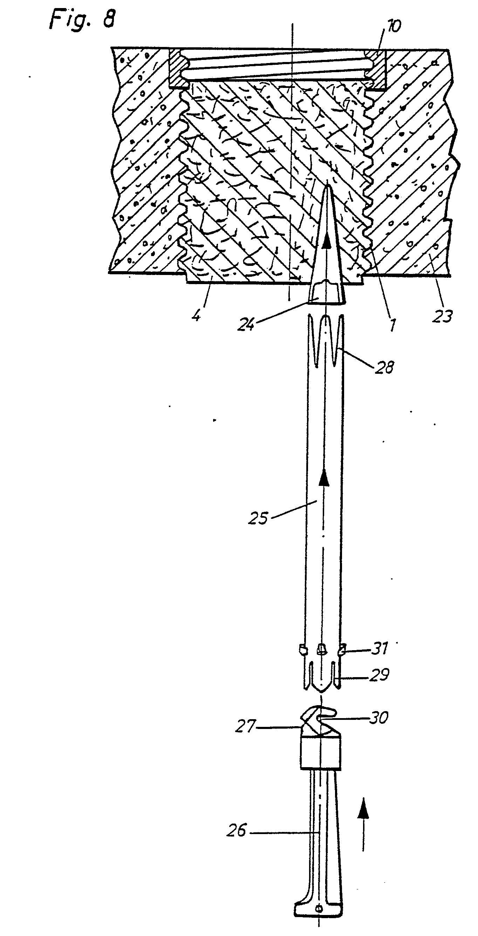

The interior of the casing from one end along a portion 3 thereof is filled with an elastic fire retardant foamed material 4, which is foamed in situ in the casing so that the cured foam is kept compressed by the casing. The foamed material suitably comprises a silicon foam which is commercially available under the designation "Dow Corning 3-6548 RTV", this scum suitably being produced in situ in the casing 2. Since the material expands as it is produced, when it assumes a consistency like that of foam rubber, the interior threads of the casing are also filled, which, apart from the casing holding the foamed material compressed transverse the axial direction of the casing, contributes to the retention of the foamed material and furthermore gives a decidedly better seal than if the inside of the casing were smooth. Although not shown, one or more reinforcing nets can be set into the foamed material, partly to prevent the material from being broken off during subsequent cable laying (see Figures 8—11), and partly for enabling a sealing arrangement of a plurality of cables through the fire sealing body without breaking up the material and forming cracks in it. The length 3a, filled with foamed material, is adapted to the stipulations applicable for the fire seal in question, which have the form of a fire classification signifying a given minimum length, and electrical safety stipulations signifying given maximum length.

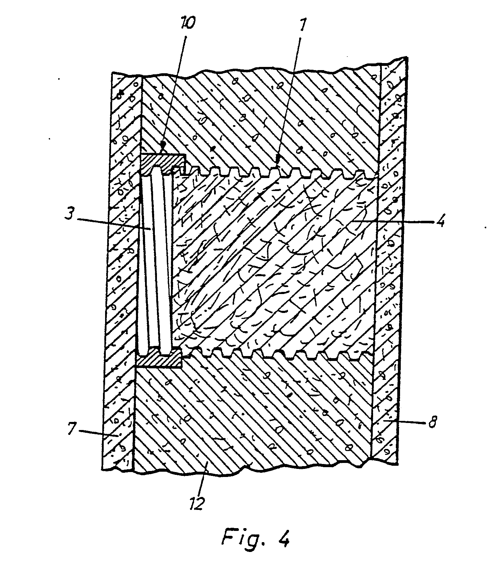

The fire sealing body 1 is produced with an unfilled portion 5 suitably having a length enabling the use of the fire sealing body for different current wall thicknesses. The portion 5 can be easily cut, suitably with a saw, to the correct length, e.g. as illustrated in Figure 1, along the chain-dotted line 6. Figures 3 and 4 illustrate how a fire sealing body is cast in between two shuttering walls 7 and 8, the body having the principal embodiment illustrated in Figures 1 and 2.

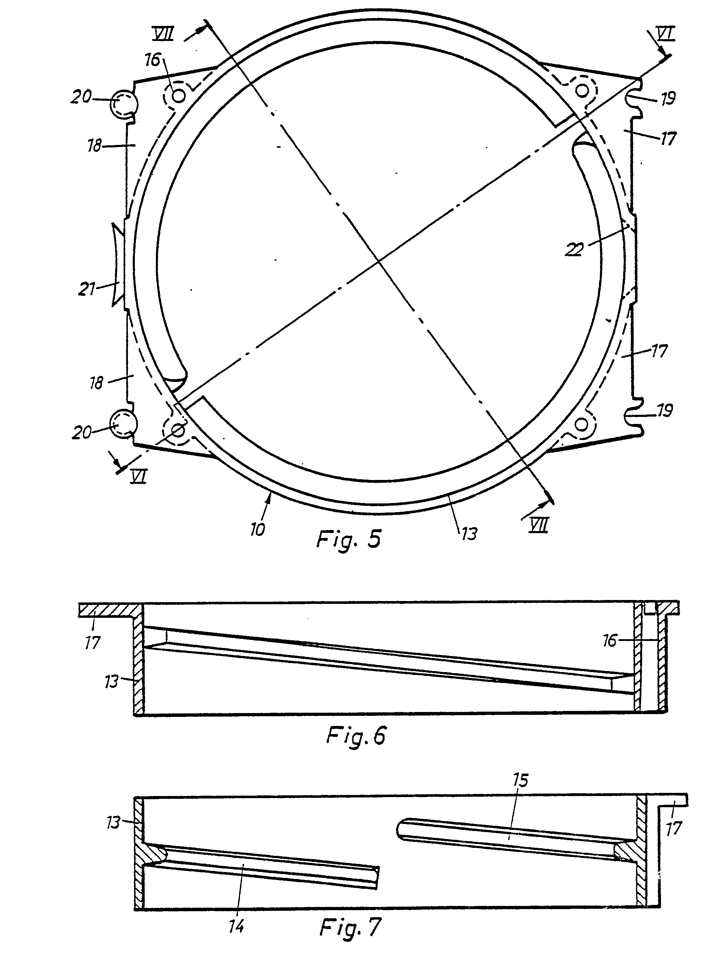

Figure 3 illustrates how a fastening frame generally denoted by the numeral 10 is attached by means of nails 9 to one shuttering wall 7, said frame having an embodiment such as is more closely described below with reference to Figures 5—7, i.e. it has, inter alia, an internal thread adapted to the thread 3 of the casing 2. After cutting the body 1 to at least the approximate length, the body is fixed relative the shuttering wall 7 by being screwed into the attachment frame 10. By screwing-in to different depths, there is offered a possibility of adjustment with relation to wall thickness. The shuttering wall 8 is subsequently erected and the shuttering pulled together, whereby the fire sealing body is clamped firmly between the shuttering walls. Adjustment within a given tolerance for the length of the body is also obtained by the elasticity the body has longitudinally, due to its threaded form. As will be seen from Figure 3 (and also Figure 1) the foamed material thrusts out a small distance (some millimeters) outside the casing 2. This projecting portion is denoted by the numeral 11. There is thus obtained by friction between the foamed material and the shuttering wall a retention of this end of the fire sealing body against the shuttering wall. Further surety for retaining this end can be obtained by nailing a suitably relatively flat means (not shown) against the shuttering wall 8 this means being provided with inwardly thrusting means, e.g. in the form of concentric rings, which come into engagement with the foamed material after erecting the shuttering wall. In this case, as an alternative, the projecting foamed material 11 could be avoided. By using a fastening frame, there is no longer the requirement for cutting off the body perfectly with relation to the flatness of the cut as well as perpendicularity to the longitudinal axis of the body.

Figure 4 illustrates the fire sealing body 1 with the fastening frame 10 after filling concrete 12 between the shuttering walls 7 and 8. By the external threads also being filled with concrete, a retention of the fire sealing body by means of its shape is obtained in the concrete. The body forms a gas-, fire-, water- and soundproof lead-through during the whole of the building time, both before and after cable laying through it.

An advantageous embodiment of the fastening frame 10 illustrated in Figure 3 will now be described with reference to Figures 5—7. This frame comprises an annularly shaped wall 13, along the inside of which a thread is formed. The latter comprises, in the illustrated embodiment, two straight and practically semi-circular ridges 14 and 15, the free ends of which do not meet, seen in plan view. On the outside of the wall 13 there are arranged four diametrically opposing nail holes 16 for nailing the frame to the shuttering wall (wall 7 in Figures 3 and 4). The nail holes 16 flare out in a direction towards the edge side of the frame wall 13 which is to engage against the shuttering wall. When the wall 8 is taken down, the nails accompany it, but the frame remains in the concrete. On the opposite edge side of the frame wall 13, four diametrically opposing corner portions 17 and 18 project out at right angles to the wall. The corner portions 17 are hereby formed with outwardly open slots 19 and the corner portions 18 are provided with buttons 20 which can be snapped into the slots 19 in an adjacent frame to form a desired number of frames 10 snapped together in a row. To ensure a positive such snapping together of adjacent frames, each frame is provided with locking means comprising a dovetail tongue 21, projecting from the surface of the fastening frame wall and situated between the buttons 20 and a complementally shaped, diametrically opposite slot 22.

Figures 8—11 illustrate different work operations in pulling a conduit through a fire sealing body after the shuttering has been taken down. The body illustrated in exemplification corresponds to the body according to Figure 4 and is illustrated cast into the concrete wall 23. To obtain a sealed passage of the conduit a special lead-through tool is used. It comprises three parts, a conical tip 24, a sleeve 25 and a handle 26 with a head 27, which coact in a mode apparent from the following description.

As shown in Figure 8, it is suitable to push the tip 24 by itself into the foamed material 4, or if several conduits are to be pulled through, a tip is inserted for each conduit, the placing of the different conduits can thereby be planned with the aid of the tips. The forward end 28 of the sleeve is inserted in the tip and with the aid of the handle. Tip and sleeve are pressed through the foamed material, and when the tip has passed therethrough it falls away of its own accord. For this penetration, the handle can press against the back end 29 of the sleeve with the handle in a position as shown in Figure 8, there being in the head 27 of the handle an annularly formed bottoming groove (see Figure 12) in which the sleeve end is inserted during penetration. As an alternative, by special forming of the head 27 (shown in more detail in Figure 12) with recesses 30 for hooking onto two of four heels or abutments 31, evenly distributed around the circumference of the sleeve 25 in the vicinity of the back end of the sleeve, through penetration of the tip 24 and sleeve 25 can take place, after such a hooking-on, and in an attitude which is angular relative to the sleeve for the handle 26, which can be valuable for more inaccessible places.

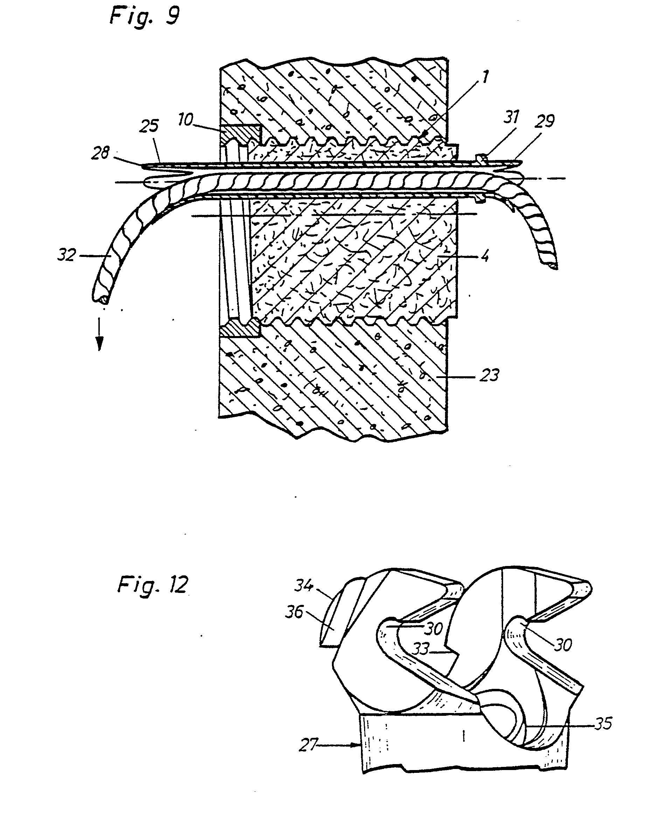

Figure 9 illustrates a position of the sleeve 25 after it has been pressed through the fire sealing body, and a conduit 32 has been pulled through the sleeve. Since the hole provided through the body is lines by the sleeve and thereby protected by it, the conduit can be pulled through the body without damagaing the latter. As is shown, the sleeve is slit up at the ends 28, 29 to form tunnel-shaped openings, thus preventing the conduit from being jammed as it is being pulled.

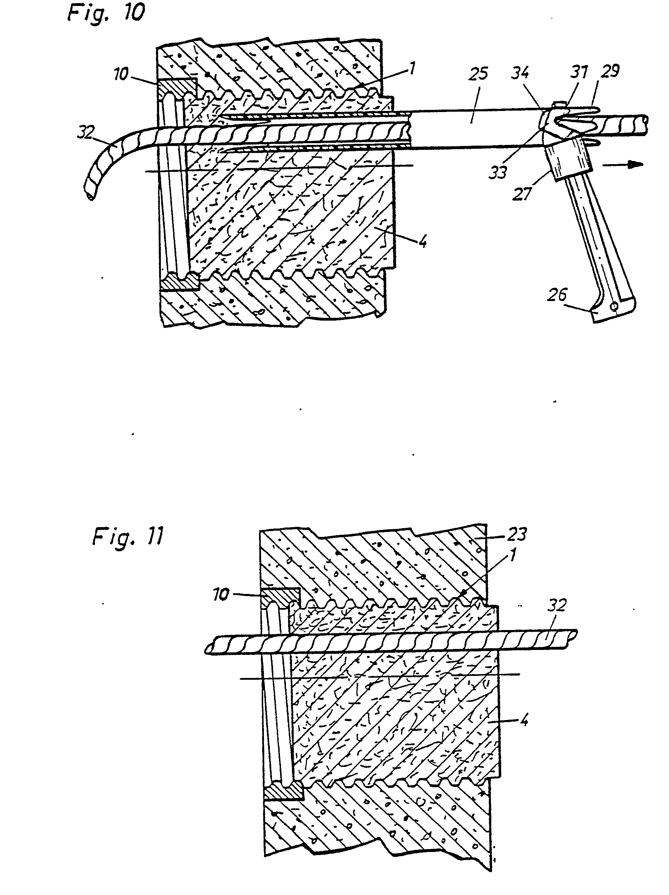

Figure 10 illustrates the withdrawal of the sleeve 25 from the foamed material after pulling the conduit is completed. Especially for this withdrawal, the sleeve is provided with said abutments 31 and the head portion 27 of the handle with said recesses 30. By means of the four abutments 31, arranged around the circumference of the sleeve, there is permitted an all-round engagement between two abutments and the recesses, for good accessibility. Turning the sleeve to the most comfortable position is thus also permitted. Furthermore, the recesses 30 are flared outwards so that the abutments 31 are also guided into the bottoms of the recesses for an angle within a relatively large angular range between the central axis of the handle and that of the sleeve, whereby there is also allowed a similarly large angular range between the handle and sleeve during withdrawal. After withdrawal, the sleeve must be removed from the conduit. For easily providing this, the sleeve is formed with perforation or other weakened stretch (not shown) extending between two opposing bottoms of the slit-up ends 28, 29. After cutting up this perforation, the sleeve can be opened out and removed from the cable. The head 27 of the handle is specially adapted for use during this cutting. On the back of the head 27, relative to the recesses 30, the head is provided with slitting-up portions (see Figure 12) each comprising a cutting, edge 33, situated inside an outwardly rounded-off slide knob 34. A positive engagement of the slitting-up portion of the head 27 is obtained in the slits at the sleeve ends 28, 29, between which the perforation extends, the slitting-up portion also being formed so that the handle can be kept within a large angular range relative the sleeve, e.g. 15—55°, for comfortable accessibility. The accessibility furthermore increases by the head 27 being formed with two slitting-up portions one behind each recess 30, which thus also increases the life of the handle. The rounded-off slide knob 34 is adapted for preventing the cutting edge 33 damaging the conduit 32 during slitting-up.

Figure 11 illustrates the conduit 32 inserted in the lead-through after sleeve 25 is removed. Since no foamed material has been taken away, and the material has only been compressed, the foamed material 4 springs back elastically and a sealing closure of foamed material is obtained round the conduit.

As given above, the head 27 of the handle is more clearly shown in Figure 12, which illustrates the forming of recess 30, cutting edge 33 and slide knob 34. The annular groove is further shown in the Figure, the end 29 of the sleeve 25 being inserted in said groove during pressing the tip 24 and sleeve 25 through the foamed material 4 of the body 1. This groove is denoted by the numeral 35 in the Figure. A groove 36 is also shown, defined by the side of the slide knob 34 facing towards the recess 30 and a bottom wall, the lower edge shown in the Figure forming the cutting edge 33. One of the slit-up edges is successively guided by this groove 36 during slitting-up of the sleeve 25.

### Claims

1. A device for laying conduits (32) through a fire-sealing lead-through in a building element (23), said lead-through comprising an elastic fire-retardant foamed material (4), which is kept compressed in the lead-through, so that after being laid the conduit is sealingly clamped in the foamed material by compression of the latter, characterized in that the device comprises a sleeve (25) slit up at at least one end (28, 29), preferably at both ends, to form a funnel-shaped flarable end portion, and a conical driving tip (24) intended for coaction with one end of the sleeve, the insertion end (28), the tip being intended, when applied to the sleeve when the sleeve is penetrating the foamed material (4), to move the foamed material to one side under compression, and after passing through the foamed material to relinquish the sleeve, which in this position forms a conduit-laying duct protecting the foamed material.

2. A device as claimed in claim 1, characterized in that the ends (28, 29) of the sleeve (25) are interiorly chamfered.

3. A device as claimed in claim 1 or 2, characterized in that the sleeve (25) at the end (29) opposite to its insertion end (28) is provided with abutment projections (31) for coaction with recesses (30) on a tool handle (26) adapted for insertion of the sleeve into the foamed material (4), and extraction therefrom.

4. A device as claimed in claim 3, characterized by a plurality of projections (31) arranged symmetrically around the periphery of the sleeve (25).

5. A device as claimed in any of the preceding claims, characterized in that the sleeve (25) is provided with a longitudinal weakening, preferably in the form of perforation, along which the sleeve is slit up after withdrawal from the foamed material (4) after laying the conduit has been carried out.

6. A device as claimed in claims 3 or 5, characterized in that the tool handle (26) is provided with a cutting edge (33) for slitting up the sleeve (25).

7. A device as claimed in claim 5 or 6, characterized in that the tool handle is formed with a groove (35) in which the said opposite end of the sleeve (25) is inserted during penetration of the sleeve through the foamed material (4).

**Revendications**

1. Dispositif pour poser des conduits (32) dans une traversée d'étanchéité au feu d'un élément (23) de bâtiment, ladite traversée comprenant une matière cellulaire élastique (4) résistant au feu, qui est maintenue comprimée dans la traversée de manière qu'après avoir été posé, le conduit soit serré de façon étanche dans la matière cellulaire par compression de cette dernière, caractérisé en ce que le dispositif comprend un manchon (25) fendu à au moins une extrémité (28, 29), de préférence aux deux extrémités, de façon à comporter une partie extrême évasable en forme d'entonnoir, et une pointe conique (24) d'entraînement destinée à coopérer avec une extrémité du manchon, l'extrémité d'insertion (28), la pointe étant destinée, lorsqu'elle est appliquée au manchon et que ce dernier pénètre dans la matière cellulaire (4), à déplacer la manière cellulaire vers un côté sous compression et, après avoir traversé la matière cellulaire, à abandonner le manchon qui, dans cette position, forme une gaine de pose de conduit protégeant la matière cellulaire.

2. Dispositif selon la revendication 1, caractérisé en ce que les extrémités (28, 29) du manchon (25) sont chanfreinées intérieurement.

3. Dispositif selon la revendication 1 ou 2, caractérisé en ce que le manchon (25) comporte, à son extrémité (29) opposée à l'extrémité d'insertion (28), des saillies (31) de butée destinées à coopérer avec des évidements (30) d'une poignée (26) d'outil conçue pour insérer le manchon dans la matière cellulaire (4), et pour l'en extraire.

4. Dispositif selon la revendication 3, caractérisé par plusieurs saillies (31) disposées symétriquement à la périphérie du manchon (25).

5. Dispositif selon l'une quelconque des revendications précédentes, caractérisé en ce que le manchon (25) présente un affaiblissement longitudinal, de préférence sous la forme de perforations, le long duquel le manchon est découpé après avoir été retiré de la matière cellulaire (4) et après que la pose du conduit a été effectuée.

6. Dispositif selon les revendications 3 ou 5, caractérisé en ce que la poignée (26) de l'outil présente une arête de coupe (33) destinée à découper le manchon (25).

7. Dispositif selon la revendication 5 ou 6, caractérisé en ce que la poignée de l'outil présente une gorge (35) dans laquelle ladite extrémité opposée du manchon (25) est insérée pendant la pénétration du manchon à travers la matière cellulaire (4).

**Patentansprüche**

1. Vorrichtung zum Verlegen von Leitungen (32) durch eine feuersichere Durchführung in einem Bauelement (23), wobei die Durchführung ein elastisches feuerhemmendes geschäumtes Material (4) enthält, welches in der Durchführung komprimiert gehalten wird, so daß die Leitung nach dem Verlegen dichtend in dem geschäumten Material durch Kompression des letzteren geklemmt ist, dadurch gekennzeichnet, daß die Vorrichtung eine Hülse (25) enthält, welche wenigstens an einem Ende (28, 29), vorzugsweise an beiden Enden, aufgeschlitzt ist, um ein trichterförmiges aufgeweitetes Endteil zu bilden, sowie eine konische Treibspitze (24) zum Zusammenwirken mit einem Ende der Hülse, dem Einführungsende (28), enthält, wobei dei Spitze beim Anbringen an der Hülse, wenn die Hülse das geschäumte Material (4) durchdringt, dazu vorgesehen ist, das geschäumte Material unter Kompression zu einer Seite zu bewegen und nach dem Passieren durch das geschäumte Material die Hülse zu verlassen, welche in dieser Position ein leitungsverlegendes, das geschäumte Material schützendes Rohr bildet.

2. Vorrichtung nach Anspruch 1, dadurch gekennzeichnet, daß die Enden (28, 29) der Hülse (25) innen abgeschrägt sind.

3. Vorrichtung nach Anspruch 1 oder 2, dadurch gekennzeichnet, daß die Hülse (25) an dem Ende (29) entgegengesetzt ihrem Einführungsende (28) mit Anschlagsvorsprüngen (31) zum Zusammenwirken mit Ausnehmungen (30) in einem Werkzeuggriff (26) zum Einführen der Hülse in das geschäumte Material (4) und Herausziehen daraus versehen ist.

4. Vorrichtung nach Anspruch 3, gekennzeichnet durch eine Vielzahl von symmetrisch entlang dem Umfang der Hülse (25) angeordneten Vorsprüngen (31).

5. Vorrichtung nach einem der vorhergehenden Ansprüche, dadurch gekennzeichnet, daß die Hülse (25) mit einer längs verlaufenden Schwächung, vorzugsweise in Form von Perforationen, versehen ist, entlang welcher die Hülse nach dem Herausziehen aus dem geschäumten Material (4), nachdem das Verlegen der Leitung ausgeführt worden ist, aufgeschlitzt wird.

6. Vorrichtung nach Anspruch 3 oder 5, dadurch gekennzeichnet, daß der Werkzeuggriff (26) mit einer Schneidkante (33) zum Aufschlitzen der Hülse (25) versehen ist.

7. Vorrichtung nach Anspruch 5 oder 6, dadurch gekennzeichnet, daß der Werkzeuggriff mit einer Ausnehmung (35) ausgebildet ist, in welche das entgegengesetzte Ende der Hülse (25) während des Durchdringens der Hülse durch das geschäumte Material (4) eingeführt wird.

0 047 770

Fig. 1

Fig. 2

Fig. 3

1

Fig. 4

Fig. 5

Fig. 6

Fig. 7

*Fig. 8*

**Fig. 9**

**Fig. 12**

*Fig. 10*

*Fig. 11*